## Europäisches Patentamt
## European Patent Office
## Office européen des brevets

(19)

(11) Veröffentlichungsnummer: **0 217 895**
**B1**

(12) # EUROPÄISCHE PATENTSCHRIFT

(45) Veröffentlichungstag der Patentschrift:
**12.07.89**

(51) Int. Cl.⁴: **G 01 G 11/14**, G 01 G 11/00

(21) Anmeldenummer: **86902385.3**

(22) Anmeldetag: **01.04.86**

(86) Internationale Anmeldenummer:
**PCT/EP 86/00186**

(87) Internationale Veröffentlichungsnummer:
**WO 86/05874 (09.10.86 Gazette 86/22)**

(54) **GEFÄSSWAAGE.**

(30) Priorität: **04.04.85 CH 1485/85**

(43) Veröffentlichungstag der Anmeldung:
**15.04.87 Patentblatt 87/16**

(45) Bekanntmachung des Hinweises auf die Patenterteilung:
**12.07.89 Patentblatt 89/28**

(84) Benannte Vertragsstaaten:
**AT BE CH DE FR GB IT LI NL SE**

(56) Entgegenhaltungen:
**EP-A-0 140 213**
**WO-A-85/01577**
**CH-A-429 214**
**FR-A-2 384 246**
**US-A-2 705 607**
**US-A-3 853 190**

**Technisches Messen, Band 47, no. 4, April 1980, München (DE), T. Albertz: "Massenstrommessung in Stäuben", pp. 137-140**

(73) Patentinhaber: **Gebrüder Bühler AG, CH- 9240 Uzwil (CH)**

(72) Erfinder: **GMÜR, Bruno, Boppartstrasse 32, CH-9014 St. Gallen (CH)**

(74) Vertreter: **EGLI- EUROPEAN PATENT ATTORNEYS, Widenmayerstrasse 5, D-8000 München 22 (DE)**

EP 0 217 895 B1

## Beschreibung

Die Erfindung betrifft eine Schüttgutdurchlaufwaage mit einem oben und unten offenen, förderrohrförmig ausgebildeten Wägegefäß mit im wesentlichen konstantem, an eine Schüttgut-Zuführleitung und eine Schüttgut- Abführleitung angepaßtem Querschnitt sowie mit einem mit dem Wägegefäß verbundenen Abschlußorgan für dessen Bodenöffnung und mit wengistens zwei mit dem Wägegefäß verbundenen, an dessen Umfang verteilten Gewichtsmeßelementen.

## Zugrundeliegender Stand der Technik

Die klassische Getreidewaage weist ein kippbares, schalenartiges Wäge gefäß auf, das auf Schneiden und mehr oder weniger komplizierten Hebelmechanismen gelagert ist. Zum Vermeiden von äußeren Störeinflüssen, z. B. durch unbeabsichtigtes Berühren, wird das Wägegefäß mit einem Gehäuse geschützt, sodaß von außen meist nur noch ein Teil des Hebelwerkes sichtbar ist.

In jüngster Zeit werden die Wägegefäße zur Entleerung mit einer steuerbaren Bodenklappe versehen. Damit kann die Zeitdauer eines Wägespieles durch die entsprechende Verkleinerung der bewegten und zu dämpfenden Massen verkürzt werden. Dies ermöglicht es, die Gewichtswerte schneller an der Waage abzulesen.

Eine weitere Steigerung der Leistungsfähigkeit der Waagen konnte mit der Anwendung elektronischer Steuer- und Meßwerterfassungsmittel erzielt werden. Das mechanische Wägespiel bleibt aber stets das Grundproblem jeder Waage, ganz besonders, wenn eine amtliche Eichung der Waage vorgenommen werden soll. Durch das fallende Schüttgut und durch die Betätigung der Verschlußorgane treten Schwingungen in allen Raumrichtungen auf, die gedämpft bzw. deren Beruhigung abgewartet werden muß. Die elektronischen Mittel würden an sich eine weitere, sehr starke Verkürzung und Steigerung der Genauigkeit der Meßwerterfassung zulassen, sofern auch die mechanische Seite entsprechend verbessert werden kann.

Aufgrund steigender Automatisierung wird allgemein ein verstärkter Einsatz von Waagen verlangt und trotzdem sollen dabei die Aufwendungen für die laufende Verwägung des Schüttgutes in einem vertretbaren Rahmen bleiben.

Die ältere, aber nachveröffentlichte EP-A-0 140 213 (GEBR. BÜHLER) beschreibt die im Gattungsteil des Patentanspruches 1 angegebenen Merkmale. Bei dieser EP-Druckschrift sind das Wägegefäß, eine Zuführleitung und eine Abführleitung jeweils im Abstand voneinander angeordnet und dabei jeweils untereinander als im wesentlichen querschnittsgleiche rohrförmige Förderleitungsabschnitte ausgebildet, die, wie in einer Förderleitung, fluchtend aufeinander ausgerichtet sind. Dabei verbinden ein Druckausgleichsrohr den Abführleitungsabschnitt und den Zuführleitungsabschnitt miteinander und flexible Manschetten jeweils den Zuführ- und den Abführleitungsabschnitt mit dem Wägegefäß. Mit dieser Vorrichtung ist eine exakte Gewichtserfassung eines kontinuierlichen Schüttgutstromes möglich. Hierzu wird der Schüttgutstrom ohne Unterbrechung in das rohrförmige Wägegefäß eingeleitet. Ferner sind in dieser Druckschrift eine Speiseklappe für die Beschickung des Wägegefäßes und ein Abschlußorgan zum Schließen und Öffnen der Bodenöffnung des Wägegefäßes vorgesehen. Über Steuermittel läßt sich dabei die Stellung der Speiseklappe und die des Abschlußorganes steuern. Hierzu sind die Gewichtsmeßelemente als elektrisch-elektronische Meßwerterfassungselemente ausgestaltet und arbeiten auf eine Rechnereinheit, die Ihrerseits auf Steuerorgane arbeitet.

Aus der USA 3 853 190 (DELESDERNIER) ist ebenfalls eine Schüttgutdurchlaufwaage mit einem oben und unten offenen Wägegefäß mit im wesentlichen konstantem Querschnitt, einem mit dem Wägegefäß verbundenen Abschlußorgan für dessen Bodenöffnung und wenigstens zwei mit dem Wägegefäß verbundenen, an dessen Umfang verteilten Gewichtsmeßelementen bekannt. Dabei ist das Wägegefäß über die Gewichtsmeßmittel mit einem Rahmengestell verbunden, dessen Füße gemäß US-A-2 750 607 (INGLETT) höhenverstellbar ausgebildet sein können. Bei der bekannten Schüttgutdurchlaufwaage ist das Wägegefäß nicht als förderrohrförmiger, an die Zuführ- und die Abführleitung angepaßter Leitungsabschnitt ausgebildet. Auch sonst widmet sich diese Druckschrift nicht dem Problem, in der gesamten Schüttgutdurchlaufwaage einen kontinuierlichen Massenfluß aufrechtzuerhalten und ggf. dabei die Messung vorzunehmen.

## Offenbarung der Erfindung

Ausgehend hiervon liegt der Erfindung die Aufgabe zugrunde, einen leichten Einbau gattungsgemäßer Waagen in vorhandene Schüttgutleitungen zu ermöglichen.

Erfindungsgemäß wird diese Aufgabe dadurch gelöst, daß bei einer Schüttgutdurchlaufwaage der eingangs genannten Art, d. h. mit den Merkmalen des Oberbegriffs der Anspruchs 1, das Wägegefäß über die Gewichtselemente an einer höhenverstellbaren Plattform befestigt ist.

Erfindungsgemäße Schüttgutdurchwaagen weisen eine Vielzahl überraschender Vorteile auf. Der baulicher Aufwand derartiger Waagen ist relativ einfach. Die von Schüttgut und mechanischen Elementen hervorgerufenen Störungen sind gering, so daß die Vorteile einer schnellen und genauen Datenerfassung mittels elektronischer Mittel voll umfänglich ausgenutzt werden können. Zusätzlich wird durch die Rohrform der Wägebehälter nahezu über seine ganze Höhe hinweg bei jedem Wägespiel mit Produkt beaufschlagt, sodaß seine mit z. B. Mehl, Korn usw. in Kontakt tretenden Flächen von selbst gereinigt werden. Durch die Rohrform treten ferner fast nur senkrechte Kraftkomponenten des fallenden Produktstromes auf, sodaß nahezu keine seitlichen Ablenkkräfte festgestellt werden. Der Wägebehälter kann auf zwei Gewichtsmeßelementen abgestützt und das Schüttgut sogar so eingespeist werden, daß der theoretische Produkt-Einfall nicht genau in der Mitte des Querschnitts liegt: trotzdem bleiben die genannten Vorteile erhalten, was wohl darauf zurückzuführen ist, daß das Schüttgut in dem vorzugsweise kreisrunden, gegebenenenfalls vieleckigen Querschnitt selbst wie eine zusätzliche Dämpfung wirkt.

Als ganz besonders vorteilhaft hat sich jedoch die Abstützung auf drei Gewichtsmeßelementen gezeigt. Damit kann insgesamt ein sehr großer Grad an Symmetrie erreicht werden, was zusätzlich zu einer raschen und genauen Meßwerterfassung beiträgt. Dies ermöglicht es auch, mit einem geringeren Konstruktions- und Materialaufwand eine ganz allgemein leistungsfähigere Waage zu bauen.

Die Erfindung erlaubt aber noch eine Vielzahl besonders vorteilhafter Ausgestaltungen. So wird bevorzugt das Durchlaufwägegefäß an Hängependeln aufgehängt, die unten elastisch über jeweils eine Gummidämpfbüchse am Durchlauf wägegefäß und oben über je ein Kugelgelenk an den Gewichtsmeßelementen befestigt sind. Es ist aber auch möglich, die Gewichtswerte durch die an sich bekannte mechanische Methode über entsprechendes Hebelwerk zu erfassen.

Bei der erfindungsgemäßen Waage hat es sich in der Praxis als sehr zweckmäßig erwiesen, diese als gehäuselose Waage auszubilden, besonders wenn den Gewichtsmeßelementen elektrisch-elektronische Meßwerterfassungselemente, eine Rechnereinheit und Steuerorgane zugeordnet sind. Diese Ausbildung trägt damit ganz besonders den hygienischen Forderungen (Sanitation) im Bereich der Nahrungsmittelindustrie, besonders der Mühlenindustrie, und gleichermaßen aber auch der Funktionssicherheit Rechnung. Es bleiben nur noch minimale "Toträume", die sich direkt mit dem inneren Produktweg in Kontakt befinden.

Die Maschinenaußenseite weist gut zugängliche flächige Strukturen auf. Fast alle Maschinenzwischenräume für die funktionswesentlichen Elemente sind beseitigt, da diese nun auf sehr einfache und teils ebenso geschützte Art außen angeordnet werden können.

Im Bereich der Speiseklappe wird vorzugsweise ein Zuführraum und im Bereich unterhalb des Abschlußorganes ein Produktabführraum gebildet, dem ein Druckausgleichsrohr für den Ausgleich des Luftdruckes zwischen Zuführraum und Produktabführraum zugeordnet ist.

Es wird weiterhin als bevorzugte Ausgestaltung der Erfindung vorgeschlagen, den Zuführraum und den Produktabführraum durch eine flexible Manschette mit dem Durchlaufwägegefäß zu verbinden, wobei die entsprechenden Übergangsquerschnitte bevorzugt eine gleiche Fläche aufweisen. Auf diese Weise ist es möglich, störende Luftströmungen völlig zu vermeiden, da ein Druckausgleichsrohr unabhängig von der Stellung des Abschlußorganes den Zuführraum mit dem Produktabführraum für einen Ausgleich des Luftdruckes verbindet. Luftdruckschwankungen bleiben ohne Einfluß auf das Wägeresultat.

Ein weiterer vorteilhafter Ausgestaltungsgedanke liegt darin, daß an der Bodenöffnung, als Einheit mit dem Wägebehälter verbunden, ein erweiterter Klappenraum gebildet ist, wobei der freie Strömungsquerschnitt vom Durchlaufwägegefäß in den Klappenraum durch gezielte Wahl der Stellung der Klappen fließtechnisch optimal gehalten werden kann. Das Abschlußorgan wird am Klappenraum gelagert, somit mitgewogen und als zwei Doppelbodenklappen ausgebildet, deren jede um eine etwa durch die Rohrmitte laufende, horizontale Achse verschwenkbar ist. Jeder Bodenklappe wird bevorzugt ein Betätigungszylinder zugeordnet. Auch hier entstehen nahezu keine Reaktionskräfte der zwei bevorzugt gegensinnig bewegten Klappen auf das Durchlaufwägegefäß bzw. auf die Gewichtsmessung.

Ein weiterer neuer Ausbildungsgedanke liegt darin, daß bei einer erfindungsgemäßen Gefäßwaage die Plattform bevorzugt an drei oder vier Säulen in ihrer Höhe verstellbar befestigt ist, wobei die Säulen vorzugsweise entweder auf dem Boden abstützbar oder an einer Decke aufhängbar sind.

Die erfindungsgemäße Verbindung der Rohrform mit einer Plattform bringt ganz besondere Vorteile bei der Herstellung, indem mit nur kleinen Mehraufwendungen verschiedene Typenreihen erstellt werden können. So ist es möglich, entweder Höhe oder Durchmesser des Durchlaufwägegefäßes zu verändern, um eine Baureihe verschiedener Volumina zu erhalten. Trotzdem ist das Ganze eine auf sehr vielseitige Weise anpaßbare Baueinheit. Es kann vorteilhafterweise auch der Produktzuführraum als Speisekopfeinheit mit Speiseklappe ausgebildet und direkt auf der Plattform abgestützt sein. Gleichermaßen vorteilhaft kann auch der Produktabführraum als Produktaufnahmegefäß ausgebildet und an der Plattform befestigt werden. Damit wird es möglich, eine sehr lange als unbefriedigend empfundene Situation zu verbessern. In der Mehrzahl der Fälle ist von der ganzen Anlagendisposition her eine bestimmte nicht änderbare Übergabestelle der zuführenden Produktspeiseleitung gegeben. Häufig treten Schwierigkeiten für den Einbau der Waagen auf. Das neue Konzept der Höhenverstellbarkeit ist für die Erstmontage sehr hilfreich.

Die neue Waage stellt eine fertig montierbare Baueinheit dar, die trotzdem sehr flexibel an die praktischen Gegebenenheiten anpaßbar ist.

Bevorzugt wird auch der elektrische Steuerkasten direkt an der Plattform befestigt, wobei pneumatische Ventile direkt am Steuerkasten angeordnet sind. Damit läßt sich beispielsweise das Auswechseln eines Zylinders oder sogar des ganzen Steuerkastens mit wenigen Handgriffen bewerkstelligen.

Die erfindungsgemäße Gefäßwaage stellt somit eine Gefäßwaage mit einem Durchlaufwägegefäß dar, das einen rohrförmigen, im wesentlichen konstanten Querschnitt mit einer durch ein Abschlußorgan verschließbaren bzw. freigebbaren Bodenöffnung aufweist, sowie mit einer mit dem Durchlaufwägegefäß verbundenen Einrichtung zur Gewichtsmessung, wobei das Durchlaufwägegefäß über wenigstens zwei Gewichtserfassungselemente abgestützt ist, und mit Steuergliedern, die bei Erreichen eines vorgegebenen Gewichtswertes das Abschlußorgan zum Entleeren des Durchlaufwägegefäßes öffnen und nach erfolgter Entleerung wieder schließen. Dabei wird bevorzugt eine Speiseklappe getrennt vom Durchlaufwägegefäß vorgesehen, mittels derer die Produktzufuhr bei Erreichen eines vorwählbaren Gewichtswertes unterbrechbar ist, wobei die verschließ- bzw. freigebbare Bodenöffnung einen im wesentlichen dem Querschnitt des Durchlaufwägegefäßes entsprechenden Querschnitt aufweist und wobei die mindestens zwei Gewichtserfassungselemente am Umfang des Rohrquerschnitts verteilt sind.

## Kurze Beschreibung der Zeichnungen

Die Erfindung wird nachfolgend anhand der Zeichnung beispielshalber noch näher erläutert. Dabei zeigen:

Figur 1   schematisch eine Gefäßwaage, jedoch ohne erfindungsgemäße Befestigung an einer höhenverstellbaren Plattform.

Figur 2   eine Lösung entsprechend der aus Figur 1 mit einer Mehrzahl baulicher Ausgestaltungsgedanken;

Figur 3   eine weitere Ausführungsform der Erfindung;

Figur 4   eine Aufhängung bei einer erfindungsgemäßen Gefäßwaage in vergrößertem Maßstab;

Figur 5   und 6 schematisch zwei Einbau- und Ausführungsmöglichkeiten der Erfindung, und

Figur 7   den Verlauf des Wägesignales bei einer erfindungsgemäßen Gefäßwaage während mehrerer Wägezyklen.

## Ausführliche Beschreibung der Zeichnungen

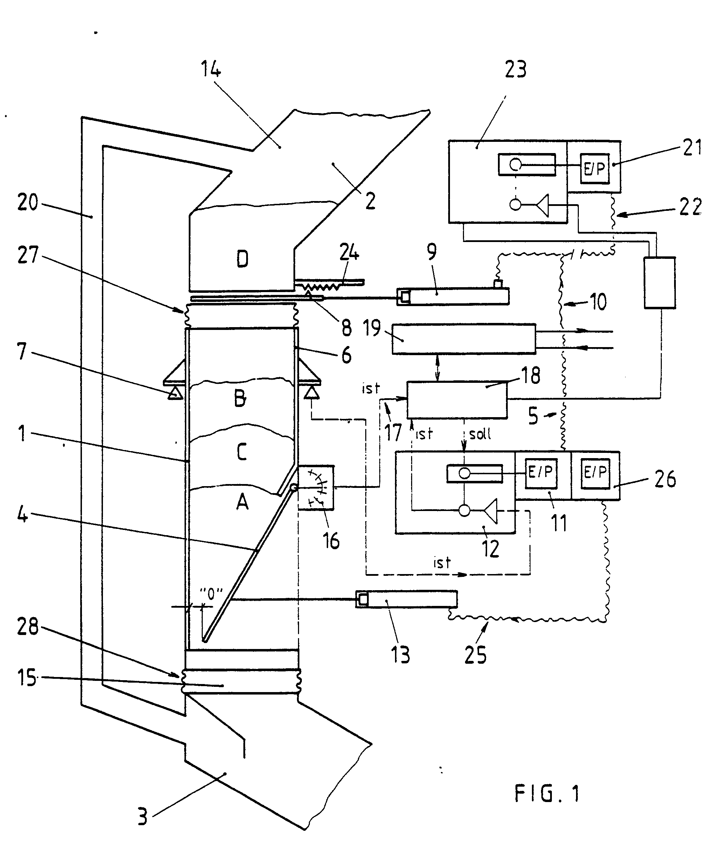

In Figur 1 ist im Prinzip eine Verwägevorrichtung gezeigt, die in ihrem oberen Bereich eine Zuführleitung 2, in ihrem mittleren Bereich eine Rohrwaage 1 und in ihrem unteren Bereich eine Abführleitung 3 aufweist. Die Rohrwaage 1 ist mit einem Abschlußorgan 4 versehen, mittels dessen der Auslauf der Rohrwaage 1 verschlossen oder geöffnet werden kann. Des weiteren sind auch noch eine Rechner-Einheit bzw. Steuermittel 5 zur Verwertung der von der Verwägeeinrichtung angelieferten Meßsignale vorgesehen. Der Hauptteil der Rohrwaage 1 wird durch ein Durchlaufwägegefäß bzw. einen Wägebehälter 6 gebildet, der auf zwei dargestellten Gewichtsmeßelementen bzw. Druckmeßdosen 7 oder auf anderen, zur raschen Erfassung momentaner Gewichtswerte geeigneten Elementen abgestützt ist. Der Wägebehälter 6 ist bei der gezeichneten Prinzipdarstellung so angeordnet und ausgebildet, daß er Teil der Förderleitung selbst ist, d. h. er ist mit einem Durchlaufraum versehen, dessen Querschnitt dem der Zuführleitung 2 bzw. der Abführleitung 3 entspricht oder höchstens einen derart großen Querschnitt aufweist, daß alle Wandteile während des Betriebs mit Produkt bestrichen werden. Ein wichtiges Kriterium liegt darin, daß das Produkt bei der Entleerung im wesentlichen als geschlossene Säule, d. h. im Massenfluß, ausgetragen wird. Hierdurch ist gewährleistet, daß das aus der Zuführleitung 2 ankommende Produkt ohne eine durch den Innenquerschnitt des Wägebehälters 6 gebildete Störung in die Abführleitung 3 weiterströmen kann.

In der Zuführleitung 2 ist eine Speiseklappe bzw. ein Produktschieber 8 vorgesehen, der über einen Pneumatikzylinder 9 betätigt wird. Der Pneumatikzylinder 9 wird über eine Luftleitung 10 und einen elektro-pneumatischen Wandler 11 gesteuert, welcher von einem Umsetzer 12 Korrektursignale erhält. Je nach Produkt ist es vorteilhaft, als Abschlußorgan 4 einen Bogen- oder Flachschieber oder aber eine Pendelklappe zu verwenden, die (über nicht dargestellte) elektromotorische Mittel, z. B. einem Stellmotor oder einem Pneumatikzylinder 13, betätigt werden können und mit Druckluft über eine Steuerleitung 25 und einen elektro-pneumatischen Wandler 26 versorgt und gesteuert werden. Mit dem Abschlußorgan 4 ist auch eine Positionsanzeige 16 verbunden, die z. B. als Drehpotentiometer ausgebildet sein kann. Das entsprechende elektrische Signal wird über eine Steuerleitung 17 weitergeleitet, welche die jeweilige Ist-Lage der Pendelklappe 4 feststellt und einem Rechner 18 mitteilt.

Die Gewichtsmeßdosen 7 geben das von ihnen erzeugte, dem gemessenen Gewicht entsprechende Signal an den Umsetzer 12 weiter, der über ein Bedienungsgerät 19 mit dem Rechner 18 verbunden st. Dabei ist der Umsetzer 12 an den elektro-pneumatischen Wandler 26 angeschlossen, der mit dem pneumatischen Zylinder 13 zur Steuerung des Taktspieles der Rohrwaage verbunden ist. Die gezeigte Anordnung ermöglicht ein einfaches elektronisches Erfassen der gemessenen Gewichtswerte sowie deren Weiterleitung an den Rechner 18 zur Berechnung des gewünschten Produktdurchsatzes (Produktmenge pro Zeit). Des weiteren kann ein Druckausgleichsrohr 20 für die Ausschaltung solcher Störfaktoren vorgesehen werden, die dadurch entstehen, daß in der Zuführleitung 2 und der Abführleitung 3 unterschiedliche Druckverhältnisse auftreten können. Hierzu kann das Druckausgleichsrohr 20 einen Zuführraum 14 direkt oberhalb des Wägebehälters 6 mit einem Produktabführraum 15 direkt unterhalb desselben und unabhängig von der Stellung des Abschlußschiebers 4 frei verbinden.

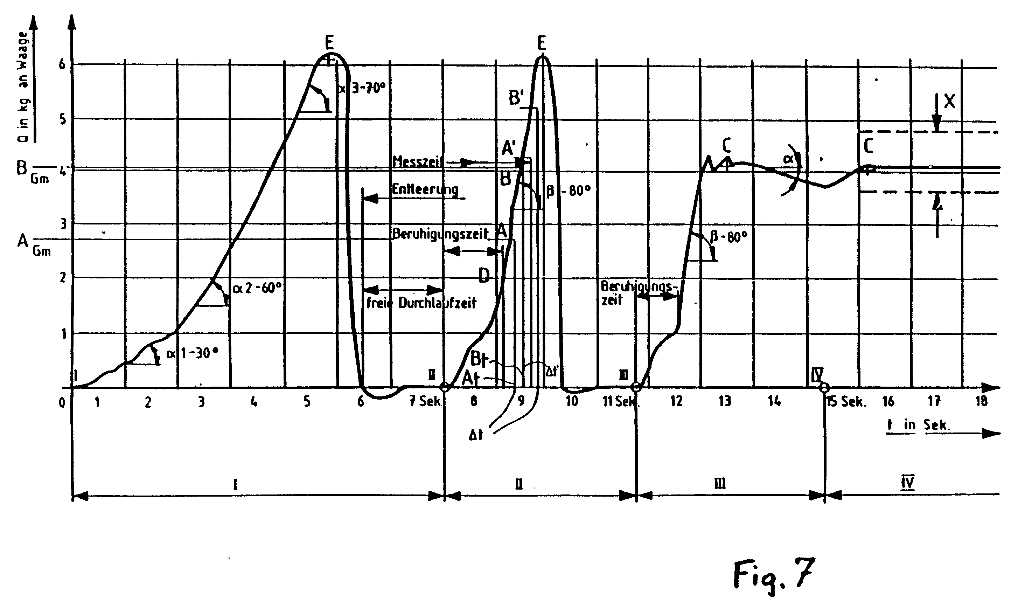

Die erfindungsgemäße Gefäßwaage ermöglicht verschiedenartige Meßzyklen, wie dies in der Figur 7 dargestellt ist. Bei Beginn einer ersten Messung wird das Abschlußorgan 4 in die geschlossene Stellung gebracht. Der Wägebehälter 6 beginnt sich zu füllen und erreicht nacheinander die Füllung A und dann B. Wenn die Produktionsanlage neu in Betrieb genommen wird, zeigt auch die Waage die anfängliche Steigerung der Produktspeisung (Meßzyklus I). Nach einer gewissen Zeit ist eine stabile Einspeisung über der ganzen Meßzeit zu erkennen. Der Wägebehälter 6 wird am Ende der ersten Messung wieder vollständig geleert.

Wird am Ende jedes Meßzyklusses I bzw. II der Produktschieber 8 geschlossen, so können auf diese Weise das Füllgewicht für jeden Meßzyklus erfaßt und über die gewünschte Zeitspanne alle Gewichte aufaddiert werden. Man erhält so entsprechend der traditionellen Anwendung der Gefäßwaagen über die Zeit die genaue Durchsatzmenge.

Eine weitere Möglichkeit liegt nun aber darin, daß der momentane Durchsatz über die Auswertelektronik ermittelt und z. B. für Steuer- und Regelvorgänge eingesetzt wird.

Es wird nun in der Figur 7 auf den dargestellten Zyklus II Bezug genommen:

Der Verlauf der gemessenen Gewichtszunahme Q wird in kg über der Zeit t (in Sekunden) dargestellt. Der Zeitpunkt II bezeichnet dabei den Schließzeitpunkt des Waagenausganges, d.h. die Vollendung der Schließbewegung des Abschlußorganes 4. Mit dem Schließen des Abschlußorganes 4 und dem Öffnen des Produktschiebers 8, füllt sich der Wägebehälter 6, wobei das erzeugte Wägesignal entsprechend der Kurve vom Ausgangspunkt II zunächst sehr unregelmäßig und mit erkennbaren Überschwingungen ansteigt, weil hier das gesamte Waagensystem durch den ersten Aufprallimpuls in Schwingungen gebracht wird und deshalb überschwingt.

Bei gut ausgebildeter Dämpfung ist jedoch bereits nach kurzer Zeit, im dargestellten Beispiel nach etwa 1 Sek., eine Beruhigung eingetreten, die etwa dem Punkt D entspricht. Vom Punkt D an beginnt nun ein linearer Anstieg der gemessenen Werte bis hin zum Punkt E, bei dem das Abschlußorgan 4 geöffnet wird. Der Produkts 8 wird geschlossen. Entsprechend dem nunmehr erfolgenden Auslaufen des Produktes fällt das Gewicht in der Rohrwaage 1 wieder bis zum Nullpunkt ab, wonach sich bei der Waage infolge der auftretenden Trägheitseffekte sogar kurzzeitig ein negatives Gewichtssignal einstellt. Anschließend bleibt das Abschlußorgan 4 während einer gewissen Zeit geöffnet, bis es wieder geschlossen wird. Nach erfolgter Schließung (erneuter Schließzeitpunkt des Waagenausgangs bzw. beendete Schließbewegung des Abschlußorganes 4) kann der Zyklus II beliebig oft wiederholt werden.

Wesentlich für das erstmalige Ermitteln des konstanten Durchsatzes ist hierbei, daß im Bereich des linearen Meßwertanstiegs, d. h. im Bereich zwischen dem Beruhigungspunkt D und dem Endpunkt des linearen Gewichtsanstiegs E die erforderlichen Messungen bei gleichzeitiger Zeiterfassung erfolgen, wobei auf diese Weise sehr genau der momentane Durchsatz und der Beginn einer stabilen Speisung erfaßt wird.

Die neue Gefäßwaage kann aber auch betrieben werden, indem das Abschlußorgan 4 in einer solchen Offenstellung gehalten wird, daß die Produktzufuhr und die Produktabfuhr gleich groß sind, wie dies in Figur 7 mit dem Meßzyklus III und IV dargestellt ist. Nach einer mittleren Füllung in dem Wägebehälter 6 (Füllung C) wird z. B. durch Regelung der Öffnungsstellung "0" des Abschlußorganes 4 ein konstanter Produktdurchsatz ermittelt.

Aufgrund der vorstehenden Ausführungen ist ersichtlich, daß der Rechner 18 so programmiert werden kann, daß je nach Erfordernis folgende Daten eingegeben oder in beliebiger Kombination genommen werden können.

- der momentane Durchsatz;
- die Totalisierung und gemittelte Produktmenge, z. B. über eine Zyklusdauer von 10 Sekunden;
- die Totalisierung und gemittele Produktmenge, bezogen auf eine oder mehrere Stunden;
- jeweils ein 10, 20 ... 50 kg-Impuls, d. h. die effektive (errechnete) Zeitangabe, wann eine bestimmte Menge an Produkt durchgeflossen ist;
- eine bestimmte (vorgegebene) Verarbeitungsmenge, z. B. 50 t.

In der Figur 1 ist eine weitere Anwendungsmöglichkeit dargestellt. Der Produktdurchsatz soll über eine ganze Verarbeitungsperiode auf Waagengenauigkeit (z. B. +/- 0,2 %, +/- 0,1 % Genauigkeit) geregelt werden. Die Genauigkeit soll sowohl momentan wie als Summe über der Verarbeitungsperiode eingehalten werden.

Der Zuführraum 14 ist als Stauraum und der Produktschieber 8 als Austragdosierer ausgebildet. Der Austragdosierer kann entsprechend den Fließeigenschaften des Produktes irgend ein bekanntes Dosierelement sein. Die Druckluftsignale werden von einem elektro-pneumatischen Wandler 21 über eine Druckluftleitung 22 übertragen. Der Rechner 18 gibt an einen Umsetzer 23 die erforderlichen Vorgabe-Sollwerte, die über einen Positionsmelder 24 für eine erste Grobeinstellung bzw. Auf-/Zu-steuerung für den Produktschieber 8 verwendet werden, wobei z. B. auch gleichzeitig die Zuführmenge in den Stauraum durch (nicht dargestellte) Austrag- bzw. Zuführelemente gesteuert werden kann. Der Zuführraum 14 ist über eine flexible Manschette 27 mit dem Durchlaufwägegefäß 6 staubdicht verbunden. Der Übergangsquerschnitt vom Zuführraum 14 ist flächen- und formgleich zu dem entsprechenden Querschnitt des als Durchlaufwägegefäß ausgebildeten Wägebehäeters 6. Entsprechend ist der Übergang vom Durchlaufwägegefäß 6 zum Produktabführraum 15 ebenfalls mit einer flexiblen Manschette 28 so verbunden, daß das freie Wägespiel auf an sich bekannte Weise garantiert ist.

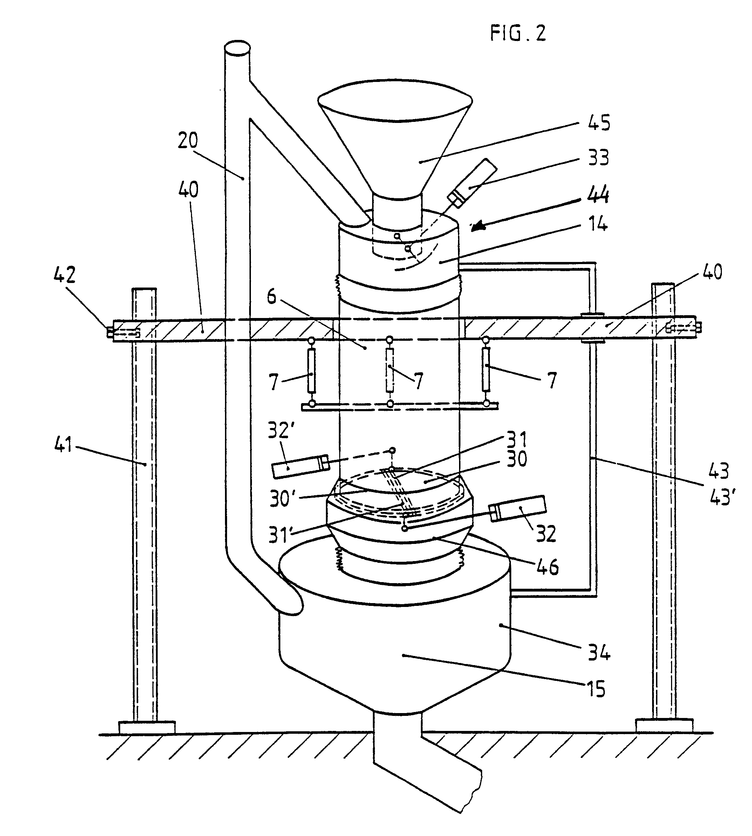

In Figur 2 ist eine neue Gefäßwaage perspektivisch dargestellt (entsprechende Teile sind mit denselben Bezugszeichen versehen wie in Figur 1). In Figur 2 ist der als Durchlaufwägegefäß ausgebildete Wägebehälter 6 an Meßwertaufnehmern bzw. Gewichtsmeßelementen 7 aufgehängt. Das Abschlußorgan 4 besteht aus einer Doppelbodenklappe. Jede Klappe 30 bzw. 30' weist eine halbrunde Form auf und wird im mittleren Bereich um je eine Achse 31 bzw. 31' bewegt, wobei die Bewegung von der geschlossenen, etwa horizontalen, in die geöffnete, senkrechte Lage erfolgt. Beide Achsen haben einen eigenen Steuerzylinder 32 bzw. 32'. Durch die gegensinnige Bewegung der zwei Klappen 30, 30' heben sich alle von der Klappenbewegung selbst verursachten horizontalen Reaktionskräfte auf. Verbleibende, nur sehr minimale Ungleichgewichte werden in der Auswertelektronik entsprechend den Meßwerten aller drei Meßwertaufnehmer korrigiert. Die praktischen Versuche haben gut bestätigt, daß ganz besonders mit drei Meßstellen die erhaltenen Meßwerte sehr nahe an die theoretischen bzw. idealen Meßbedingungen herankommen.

In Figur 2 sind die drei Grundbaukörper, aus denen die Waageneinheit besteht, deutlich erkennbar. Es sind dies der Zuführraum 14 mit integrierter Speiseklappe 33, der Produktabführraum 15, der als Auffangbehälter 34 für den gesamten Inhalt des Durchlaufwägegefäßes 6 konzipiert ist, sowie der mittlere eigentliche Wägekörper des Durchlaufwägegefäßes 6, der gleichzeitig das Abschlußorgan 4 trägt. Der untere Abschnitt des Durchlaufwägegefäßes 6 ist als erweiterter Klappenraum 46 ausgebildet.

Ganz schematisch ist in Figur 2 ferner die gegenseitige Abstützung der einzelnen Bauelemente angedeutet. Eine Plattform 40 wird durch vorzugsweise drei oder vier Säulen 41 getragen, wobei die Höhenlage der Plattform durch Verschieben und Anziehen von Klemmschrauben 42 festgelegt wird. Direkt an der Plattform 40 ist sowohl der Zuführraum bzw. Zuführkopf 14 wie auch der Produktabführraum 15 bzw.

Auffangbehälter 34 angeordnet. Die Verbindung wird durch das Druckausgleichsrohr 20 sowie zwei weiteren Stützen 43 und 43' hergestellt. Das Durchlaufwägegefäß 6 ist über die drei Gewichtsmeßelemente 7 an die Plattform 40 angehängt.

Die neue Gefäßwaage läßt sich auf verschiedene Weise mit Produkt speisen. In Figur 2 ist oberhalb der Waage ein Silo- oder Behälterunterteil 45 gezeichnet, mit dem direkt der Zuführkopf 14 fest verbunden ist. Die Speiseklappe 33 dient hier gleichzeitig als Abschlußschieber für den Silo- bzw. den Behälterunterteil 45 und als steuerbares Dosierorgan für die Behälterwaage. Die Rechnereinheit 5 kann die Speiseklappe so steuern, daß die Waageneinheit gleichzeitig Dosierorgan für den Produktdurchsatz wird. Der Zuführraum 14 wird mit der Speiseklappe 33 bevorzugt als Speisekopfeinheit 44 ausgebildet und direkt über Stützen 43, 43' an der Plattform 40 befestigt.

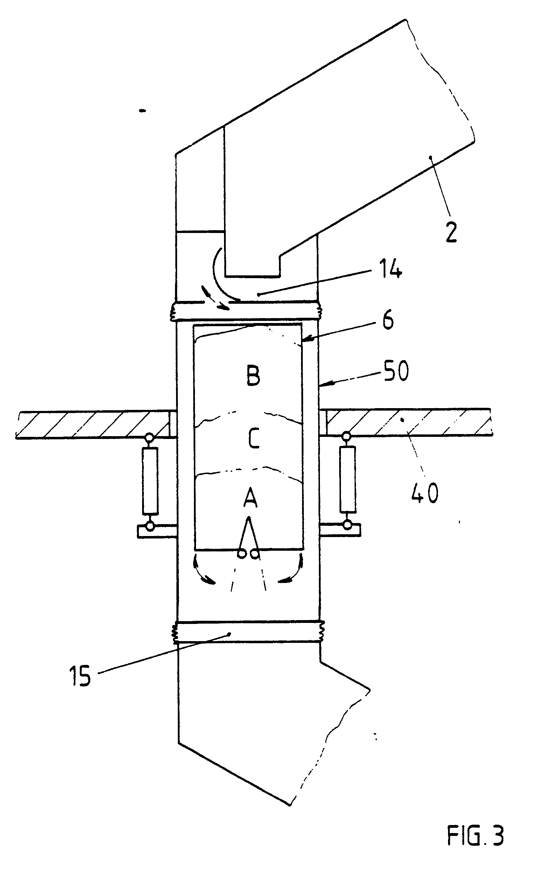

Die Figur 3 zeigt grundsätzlich einen gleichen Aufbau wie die Figuren oder 2. Anders ist hier nur der Druckausgleich vom Produktzuführraum 15 zum Zuführraum 14, indem am Durchlaufwägegefäß 6 teilweise oder über dessen ganzen Umfang ein Doppelmantel 50 angeordnet ist.

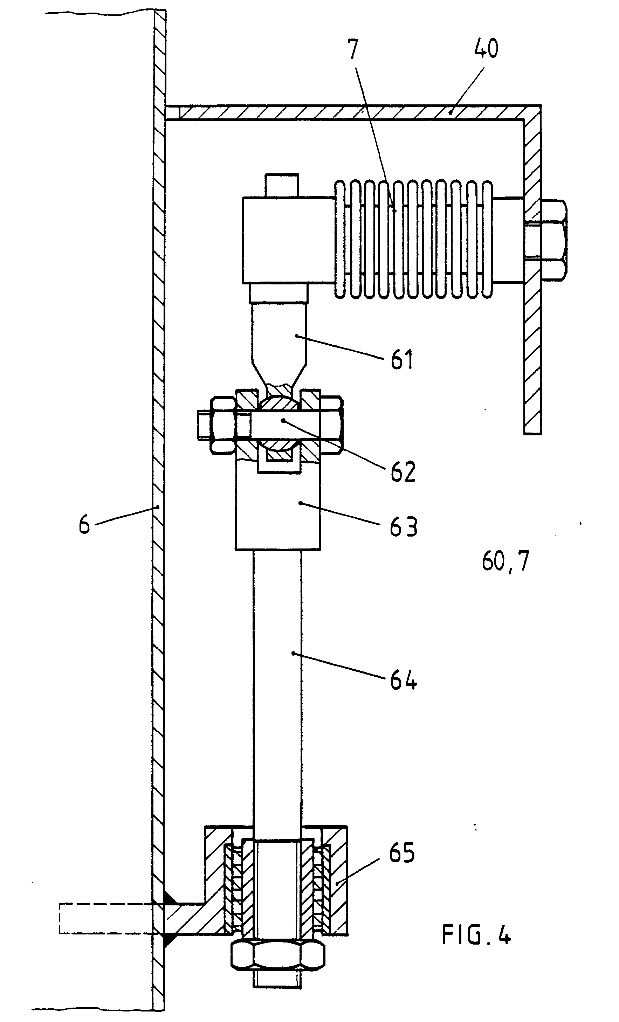

Figur 4 zeigt ein Gewichtsmeßelement 7 als Teil eines Hängependels 60. Das Gewichtsmeßelement 7 ist ein an sich bekanntes Biegestab meßelement, bei dem die unterschiedlichen Lasten durch Veränderung der elektrischen Werte von Dehnmeßstreifen elektronisch ausgewertet werden. Das Gewichtsmeßelement 7 trägt über einer Lasche 61 ein Kugelgelenk 62, dessen inneres bewegliches Lager über eine Gabel 63 sowie eine elastische Zugstange 64 am unteren Ende eine Gummidämpfbüchse 65 und damit verbunden das Durchlaufwägegefäß 6 trägt.

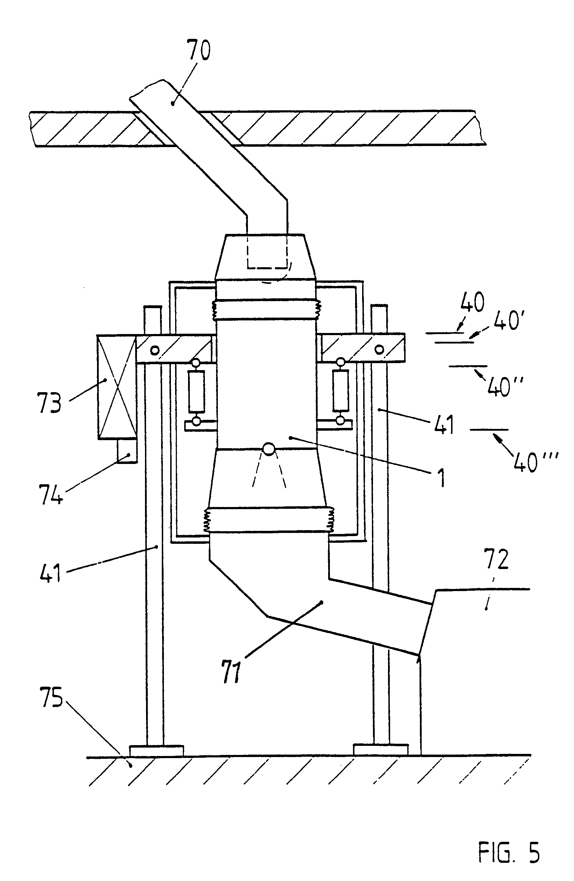

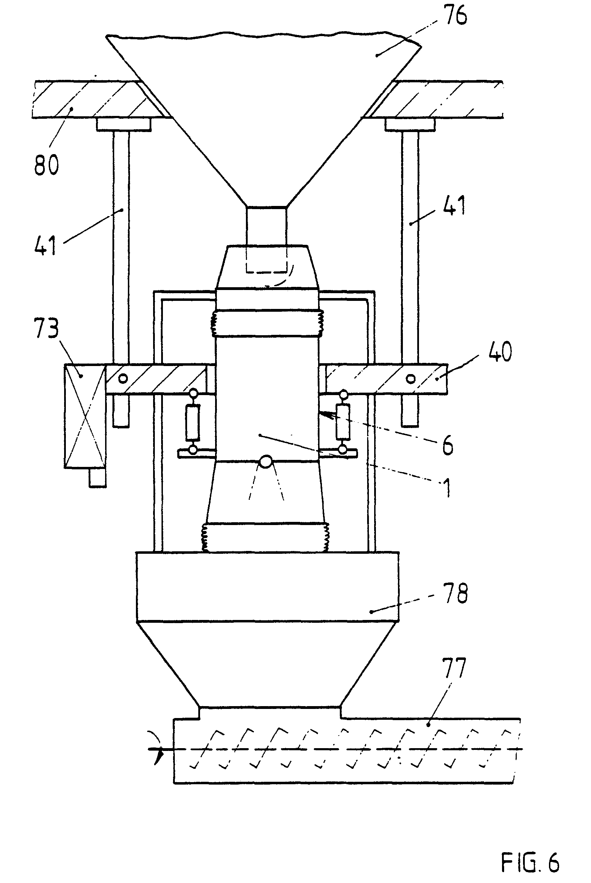

Die Figuren 5 und 6 zeigen zwei grundsätzlich mögliche Einbauarten für die erfindungsgemäße Waage. In Figur 5 wird die Gefäßwaage von einem Fallrohr 70 gespeist. Unten verläßt das Produkt die Gefäßwaage über eine große Abführleitung 71, die z. B. direkt in eine Bearbeitungsmaschine 72 geleitet werden kann. Entsprechend sind hier die Säulen 41 entweder direkt auf der Maschine oder, wie bei Figur 5, auf dem Fußboden 75 abgestützt. Ohne besondere Kenntnisse des Waagenbaues kann ein Anlagenmonteur die Behälterwaage präzis und für eine einwandfreie Funktion montieren. Die Baukastenbauweise bietet hier den weiteren Vorteil, daß auf dem elektrischen Schaltschrank 73 mit angebauter pneumatischer Steuerung 74 entspechend einem optimalen Bedienungskomfort angebaut werden kann.

Mit den Bezugsziffern 40, 40', 40'', 40''' soll angedeutet werden, daß die Plattform 40 ohne Nachteil für die Waagenfunktion auf beliebige Höhe festlegbar ist.

Figur 6 zeigt schließlich eine hängende Bauweise. Die Gefäßwaage entnimmt hier entsprechend einem genauen Sollwert das Produkt direkt aus einem Silo oder Behälter 76, das von einem Schneckenförderer 77 z. B. in den Verarbeitungsprozeß gegeben wird. Damit die Menge des Schüttgutes sehr kurzfristig abgelassen werden kann, ist zwischen dem Durchlaufwägegefäß und dem Schneckenförderer 77 ein Produktauffangbehälter 34 bzw. ein Zwischenbehälter 78 vorgesehen. Die Plattform 40 wird hier auf der gewünschten Höhe durch Befestigen der Säulen 41 an der Stockwerkdecke 80 festgelegt.

**Patentansprüche**

1. Schüttgutdurchlaufwaage mit
   a) einem oben und unten offenen, förderrohrförmig ausgebildetem Wägegefäß (6) mit im wesentlichen konstantem, an eine Schüttgut-Zuführleitung (2) und eine Schüttgut-Abführleitung (3) angepaßtem Querschnitt;
   b) einem mit dem Wägegefäß (6) verbundenen Abschlußorgan (4, 30; 30') für dessen Bodenöffnung und
   c) wenigstens zwei mit dem Wägegefäß (6) verbundenen, an dessen Umfang verteilten Gewichtsmeßelementen (7) dadurch gekennzeichnet, daß
   d) das Wägegefäß (6) über die Gewichtsmeßelemente (7) an einer höhenverstellbaren Plattform (40) befestigt ist.

2. Schüttgutdurchlaufwaage nach Patentanspruch 1, dadurch gekennzeichnet, daß eine Speiseklappe (8; 33) für die Beschickung des Wägegefäßes (6) vorgesehen ist.

3. Schüttgutdurchlaufwaage nach einem der vorstehenden Patentansprüche, gekennzeichnet durch Steuermittel (5) für das Abschlußorgan (4; 30, 30') und/oder die Speiseklappe (8; 33).

4. Schüttgutdurchlaufwaage nach einem der vorstehenden Patentansprüche, dadurch gekennzeichnet, daß die Plattform (40) an drei oder vier Säulen (41) in wählbarer Höhe befestigbar ist.

5. Schüttgutdurchlaufwaage nach Patentanspruch 4, dadurch gekennzeichnet, daß die Säulen (41) auf dem Boden abstützbar oder an einer Decke (80) aufhängbar sind.

6. Schüttgutdurchlaufwaage nach einem der vorstehenden Patentansprüche, dadurch gekennzeichnet, daß das Wägegefäß (6) über drei Gewichtsmeßelemente (7) an der Plattform (40) aufgehängt ist.

7. Schüttgutdurchlaufwaage nach einem der vorstehenden Patentansprüche, dadurch gekennzeichnet, daß das Wägegefäß (6) an Hängependeln (60) aufgehängt ist, die unten elastisch über eine Gummidämpfbüchse (65) am Wägegefäß (6) und oben über ein Kugelgelenk (62) an den Gewichtsmeßelementen (7) befestigt sind.

8. Schüttgutdurchlaufwaage nach einem der vorstehenden Patentansprüche, dadurch gekennzeichnet, daß den Gewichtsmeßelementen (7) elektrisch-elektronische Meßwerterfassungselemente, eine Rechnereinheit (5) und Steuerorgane (13) nachgeschaltet sind.

9. Schüttgutdurchlaufwaage nach einem der vorstehenden Patentansprüche, dadurch gekennzeichnet, daß sie als gehäuselose Waage ausgebildet ist.

10. Schüttgutdurchlaufwaage nach einem der vorstehenden Patentansprüche, dadurch gekennzeichnet, daß im Bereich der Speiseklappe (8, 33) ein Zuführraum (14) und im Bereich unterhalb des Abschlußorganes (4) ein Produktabführraum (15) gebildet sind und diese beiden Räume (14, 15) über ein Druckausgleichsrohr (20) für den Ausgleich des Luftdruckes zwischen dem Zuführraum (14) und dem Produktabführraum (15) verbunden sind.

11. Schüttgutdurchlaufwaage nach einem der vorstehenden Patentansprüche, dadurch gekennzeichnet, daß das Wägegefäß (6) mit dem Zuführraum (14) und mit dem Produktabführraum (15) jeweils durch eine flexible Manschette (27, 28) verbunden ist, wobei die entsprechenden Übergangsquerschnitte eine gleiche Fläche aufweisen.

12. Schüttgutdurchlaufwaage nach einem der vorstehenden Patentansprüche, dadurch gekennzeichnet, daß an der Bodenöffnung des Wägegefäßes (6) ein mit ihm verbundener Klappenraum (46) ausgebildet ist.

13. Schüttgutdurchlaufwaage nach Patentanspruch 12, dadurch gekennzeichnet, daß das Abschlußorgan (4) an dem Klappenraum (46) gelagert und als zwei Doppelbodenklappen (30, 30') ausgebildet ist, deren jede um eine etwa durch die Rohrmitte laufenden Achse (31, 31') verschwenkbar ist.

14. Schüttgutdurchlaufwaage nach Patentanspruch 13, dadurch gekennzeichnet daß jede Doppelbodenklappe (30, 30') mit einem eigenen Steuerzylinder (32, 32') verbunden ist.

15. Schüttgutdurchlaufwaage nach einem der vorstehenden Patentansprüche, dadurch gekennzeichnet, daß der Zuführraum (14) als Speisekopfeinheit (44) mit Speiseklappe (8; 33) ausgebildet. und direkt auf der Plattform (40) abgestützt ist.

16. Schüttgutdurchlaufwaage nach einem der vorstehenden Patentansprüche, dadurch gekennzeichnet, daß der Produktabführraum (15) als Auffangbehälter (34) bzw. Zwischenbehälter (78) ausgebildet und an der Plattform (40) befestigt ist.

17. Schüttgutdurchlaufwaage nach einem der vorstehenden Patentansprüche, dadurch gekennzeichnet, daß pneumatische Ventile (74) direkt an einem Steuerkasten (73) befestigt und als Bauteil direkt an der Plattform (40) besfestigbar sind.

18. Schüttgutdurchlaufwaage nach einem der vorstehenden Patentansprüche, dadurch gekennzeichnet, daß der Querschnitt des Wägegefäßes (6) im wesentlichen gleich dem Querschnitt der zum Wägegefäß (6) führenden Zuführleitung (2) und im wesentlichen gleich dem Querschnitt der vom Wägegefäß (6) weg führenden Abführleitung (3) ist.

## Claims

1. Continuous bulk material weigher having
   a) a weighing container (6), open at top and bottom, designed in the shape of a delivery tube and having a substantially constant cross-section adapted to a bulk material feed line (2) and a bulk material discharge line (3);
   b) a shut-off member (4, 30; 30'), connected to the weighing container (6), for its bottom opening and
   c) at least two weight-measuring elements (7), connected to the weighing container (6) and distributed around its circumference, characterized in that
   d) the weighing container (6) is fastened on a vertically adjustable platform (40) via the weight-measuring elements (7).

2. Continuous bulk material weigher according to Patent Claim 1, characterized in that a feed flap (8; 33) is provided for the charging of the weighing container (6).

3. Continuous bulk material weigher according to one of the preceding patent claims, characterized by control means (5) for the shut-off member (4; 30, 30') and/or the feed flap (8; 33).

4. Continuous bulk material weigher according to one of the preceding patent claims, characterized in that the platform (40) can be fastened at a selectable height on three or four columns (41).

5. Continuous bulk material weigher according to Patent Claim 4, characterized in that the columns (41) can be supported on the ground or suspended from a ceiling (80).

6. Continuous bulk material weigher according to one of the preceding patent claims, characterized in that the weighing container (6) is suspended from the platform (40) via three weight-measuring elements (7).

7. Continuous bulk material weigher according to one of the preceding patent claims, characterized in that the weighing container (6) is suspended on suspension pendulums (60), which at the bottom are fastened flexibly via a rubber damping bush (65) on the weighing container (6) and at the top via a ball joint (62) on the weight-measuring elements (7).

8. Continuous bulk material weigher according to one of the preceding patent claims, characterized in that electrical-electronic measured-value detection elements, a computer unit (5) and control members (13) are connected downstream of the weight-measuring elements (7).

9. Continuous bulk material weigher according to one of the preceding patent claims, characterized in that it is designed as a housingless weigher.

10. Continuous bulk material weigher according to one of the preceding patent claims, characterized in that a feeding space (14) is formed in the region of the feed flap (8, 33) and a productdischarge space (15) is formed in the region underneath the shut-off member (4) and these two spaces (14, 15) are connected via a pressureequalizing pipe (20) for the equalization of the compressed air between the feeding space (14) and the productdischarge space (15).

11. Continuous bulk material weigher according to one of the preceding patent claims, characterized in that the weighing container (6) is connected to the feeding space (14) and to the productdischarge space (15) by a flexible sleeve (27, 28) in each case, the corresponding transitional cross-sections having an equal area.

12. Continuous bulk material weigher according to one of the preceding patent claims, characterized in that on the bottom opening of the weighing container (6) there is formed a flap space (46) connected to it.

13. Continuous bulk material weigher according to Patent Claim 12, characterized in that the shut-off member (4) is mounted on the flap space (46) and is designed as two double-bottom flaps (30, 30'), each of which is hinged about an axis (31, 31') running approximately through the tube centre.

14. Continuous bulk material weigher according to Patent Claim 13, characterized in that each double-bottom flap (30, 30') is connected to an own control cylinder (32, 32').

15. Continuous bulk material weigher according to one of the preceding patent claims, characterized in that the feeding space (14) is designed as a feed-head unit (44) with feed flap (8; 33) and is supported directly on the platform (40).

16. Continuous bulk material weigher according to one of the preceding patent claims, characterized in that the product discharge space (15) is designed as a collecting compartment (34) or intermediate compartment (78) and is fastened on the platform (40).

17. Continuous bulk material weigher according to one of the preceding patent claims, characterized in that pneumatic valves (74) are fastened directly on a control box (73) and can be fastened as a component directly on the platform (40).

18. Continuous bulk material weigher according to one of the preceding patent claims, characterized in that the cross-section of the weighing container (6) is substantially equal to the cross-section of the feed line (2) leading to the weighing container (6) and is substantially equal to the cross-section of the discharge line (3) leading away from the weighing container (6).

## Revendications

1. Balance continue pour matériaux en vrac, comprenant:
   a) une cuve de pesage (6) en forme de conduit de transfert, ouverte à sa partie supérieure et à sa partie inférieure et à section transversale sensiblement constante et adaptée à une conduite d'amenée de matériaux en vrac (2) et à une conduite d'évacuation des matériaux (3),

b) un organe d'obturation (4, 30 ; 30') solidaire de cette cuve de pesage (6) et destiné à obturer son ouverture inférieure et

c) au moins deux éléments de mesure de poids (7) solidaires de cette cuve de pesage (6) et répartis sur son contour périphérique, caractérisée en ce que

d) la cuve de pesage (6) est fixée par ses éléments de mesure de poids (7) sur une plateforme (40) réglable en hauteur.

2. Balance continue pour matériaux en vrac, suivant la revendication 1, caractérisée en ce qu'il est prévu un volet d'alimentation (8 ; 33) pour le chargement de la cuve de pesage (6).

3. Balance continue pour matériaux en vrac, suivant l'une des revendications précédentes, caractérisée par des moyens de commande (5) prévus pour l'organe d'obturation (4 ; 30, 30') et/ou le volet d'alimentation (8 ; 33).

4. Balance continue pour matériaux en vrac, suivant l'une des revendications précédentes, caractérisée en ce que la plateforme (40) peut être fixée sur trois ou quatre colonnes (41) à une hauteur qu'on peut choisir.

5. Balance continue pour matériaux en vrac suivant la revendication 4, caractérisée en ce que les colonnes (41) peuvent s'appuyer sur le sol ou être suspendues à un plafond (80).

6. Balance continue pour matériaux en vrac suivant l'une des revendications précédentes, caractérisée en ce que la cuve de pesage (6) est suspendue à la plateforme (40) par trois éléments de mesure de poids (7).

7. Balance continue pour matériaux en vrac suivant l'une des revendications précédentes, caractérisée en ce que la cuve de pesage (6) est suspendue à des suspensions oscillantes (60) qui sont fixées à leur partie inférieure, de manière élastique, sur la cuve de pesage (6) par l'intermédiaire de manchons amortisseurs en caoutchouc (65) et, à leur partie supérieure, sur les éléments de mesure de poids (7) par l'intermédiaire d'une articulation à rotule (62).

8. Balance continue pour matériaux en vrac, suivant l'une des revendications précédentes, caractérisée en ce qu'il est prévu, en aval des éléments de mesure de poids (7), des éléments électro-électroniques d'enregistrement des valeurs mesurées, une unité d'ordinateur (5) et des organes de commande (13).

9. Balance continue pour matériaux en vrac suivant l'une des revendications précédentes, caractérisée en ce qu'elle est réalisée sous la forme d'une balance sans enveloppe.

10. Balance continue pour matériaux en vrac suivant l'une des revendications précédentes, caractérisée en ce qu'une chambre d'amenée (14) est ménagée dans la zone du volet d'alimentation (8, 33) et une chambre d'évacuation de produit (15), dans la zone située audessous de l'organe d'obturation (4), et en ce que ces deux chambres (14, 15) communiquent par une tuyauterie d'équilibrage de pression (20) destinée à équilibrer la pression d'air entre la chambre d'amenée (14) et la chambre d'évacuation de produit (15).

11. Balance continue pour matériaux en vrac suivant l'une des revendications précédentes, caractérisée en ce que la cuve de pesage (6) est reliée à chacune des chambres d'amenée (14) et d'évacuation de produit (15) par une manchette flexible (27, 28), les sections transversales correspondantes de transition possédant la même aire.

12. Balance continue pour matériaux en vrac suivant l'une des revendications précédentes, caractérisée en ce que, à l'endroit de l'ouverture inférieure de la cuve de pesage (6), il est prévu une chambre à volets (46) solidaire de cette cuve.

13. Balance continue pour matériaux en vrac suivant la revendication 12, caractérisée en ce que l'organe d'obturation (4) est monté sur la chambre à volets (46) et est réalisé sous la forme de deux volets double-fond (30, 30') dont chacun peut basculer autour d'un axe (31, 31') passant sensiblement par l'axe géométrique du conduit.

14. Balance continue pour matériaux en vrac suivant la revendication 13, caractérisée en ce que chaque volet double-fond (30, 30') est relié à un vérin (32, 32') qui lui est propre.

15. Balance continue pour matériaux en vrac suivant l'une des revendications précédentes, caractérisée en ce que la chambre d'amenée (14) forme avec le volet d'alimentation (8 ; 33) un bloc de tête d'alimentation (44) et s'appuie directement sur la plateforme (40).

16. Balance continue pour matériaux en vrac suivant l'une des revendications précédentes, caractérisée en ce que la chambre d'évacuation de produit (15) est réalisée sous la forme d'un réservoir collecteur (34) ou d'un réservoir intermédiaire (78) et est fixé sur la plateforme (40).

17. Balance continue pour matériaux en vrac suivant l'une des revendications précédentes, caractérisée en ce que des vannes pneumatiques (74) sont fixées directement sur une armoire de commande (73) qui peut se fixer directement, sous forme d'un bloc, sur la plateforme (40).

18. Balance continue pour matériaux en vrac suivant l'une des revendications précédentes, caractérisée en ce que la section transversale de la cuve de pesage (6) est sensiblement égale à la section transversale de la conduite d'amenée (2) conduisant à cette cuve (6) et sensiblement égale à la section transversale de la conduite d'évacuation (3) partant de cette cuve (6).

FIG. 1

FIG. 2

FIG. 3

7

40

61

62

63

60,7

6

64

65

FIG. 4

FIG. 5

FIG. 6

Fig. 7